(19)

Europäisches
Patentamt
European
Patent Office
Office européen
des brevets

(11) **EP 4 755 858 A1**

(12) **EUROPEAN PATENT APPLICATION**
published in accordance with Art. 153(4) EPC

(43) Date of publication:
**10.06.2026 Bulletin 2026/24**

(21) Application number: **24849083.1**

(22) Date of filing: **26.07.2024**

(51) International Patent Classification (IPC):
***C03C 25/1095*** (2018.01)  ***C03C 25/16*** (2006.01)
***C03C 25/36*** (2006.01)  ***C03C 25/285*** (2018.01)
***C03C 25/465*** (2018.01)

(52) Cooperative Patent Classification (CPC):
**C03C 25/1095; C03C 25/16; C03C 25/285;
C03C 25/36; C03C 25/42; C03C 25/465;
D21H 13/36; D21H 17/68; D21H 21/34;
H01M 10/6555; H01M 10/658; H01M 50/204;
H01M 50/211; H01M 50/249; H01M 50/293;**
(Cont.)

(86) International application number:
**PCT/JP2024/026768**

(87) International publication number:
**WO 2025/028430 (06.02.2025 Gazette 2025/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.07.2023 JP 2023123559**

(71) Applicant: **Denka Company Limited
Tokyo 103-8338 (JP)**

(72) Inventors:
• **KARIYA, Kohei
 Tokyo 103-8338 (JP)**
• **CHATANI, Hiromitsu
 Tokyo 103-8338 (JP)**
• **ITO, Hiroki
 Tokyo 103-8338 (JP)**

(74) Representative: **Müller-Boré & Partner
Patentanwälte PartG mbB
Friedenheimer Brücke 21
80639 München (DE)**

(54) **FIRE SPREAD PREVENTION MATERIAL, BATTERY PACK, AND AUTOMOBILE**

(57) [Problem] To provide a fire spread prevention material capable of sufficient fire spread prevention, a battery pack utilizing said fire spread prevention material, and an automobile comprising said battery pack.

[Solution] One aspect of the present invention provides a fire spread prevention material. The fire spread prevention material comprises an inorganic fiber base material which includes inorganic fibers, and sodium silicate which is supported on the inorganic fiber base material. The sodium silicate has a water content of 15-35 mass% at 100°C.

FIG. 1

**(Cont. next page)**

EP 4 755 858 A1

(52) Cooperative Patent Classification (CPC): (Cont.)
    Y02E 60/10

## Description

[Technical Field]

The present invention relates to a fire spread prevention material, a battery pack, and an automobile.

[Background Art]

With the spread of electrification of automobiles, development of battery packs for automobiles and battery cells used therein has been advanced. Among battery packs for automobiles, particularly those using lithium-ion battery (LiB) cells having high energy density, there is a risk that an abnormality such as thermal runaway may occur. Therefore, technologies to improve safety of battery cells have been developed.

For example, Patent Document 1 proposes a heat-absorbing sheet used for the purpose of avoiding rapid temperature rise and a thermal runaway (thermal excursion) state caused by internal short-circuiting of a lithium-ion battery. However, such a heat-absorbing sheet cannot necessarily be said to provide sufficient fire spread prevention.

PRIOR ART DOCUMENTS

Patent Literature

[Patent Literature 1] Japanese Patent Application Publication No. 2010-53196

Summary of Invention

[Problems to be Solved by the Invention]

In view of the circumstances above, the present disclosure aims to provide a fire spread prevention material having sufficient fire spread prevention, a battery pack using the material, and an automobile equipped with the battery pack.

[Solution to Problem]

According to one aspect of the present disclosure, a fire spread prevention material is provided. The fire spread prevention material includes an inorganic fiber base material containing inorganic fibers and sodium silicate supported on the inorganic fiber base material. The sodium silicate has a water content of 15 mass% or more and 35 mass% or less at 100°C.

According to this aspect, sufficient fire spread prevention can be achieved.

## BRIEF DESCRIPTION OF DRAWINGS

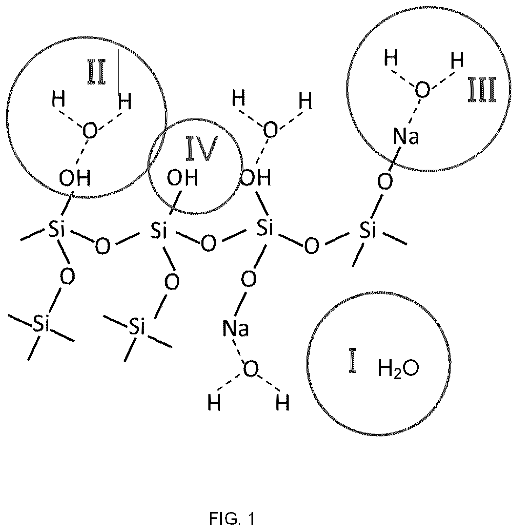

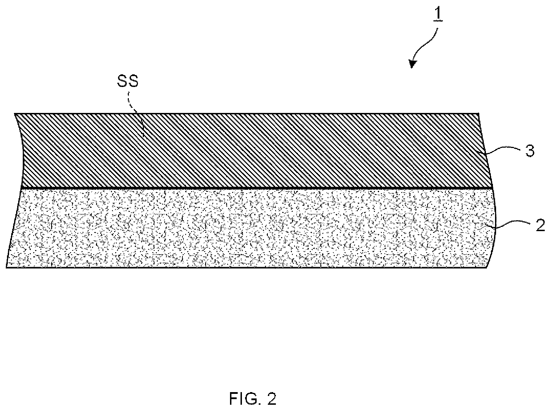

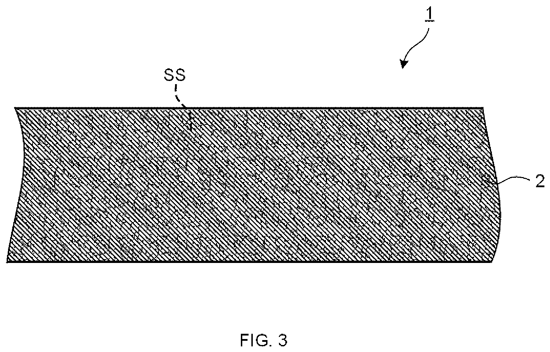

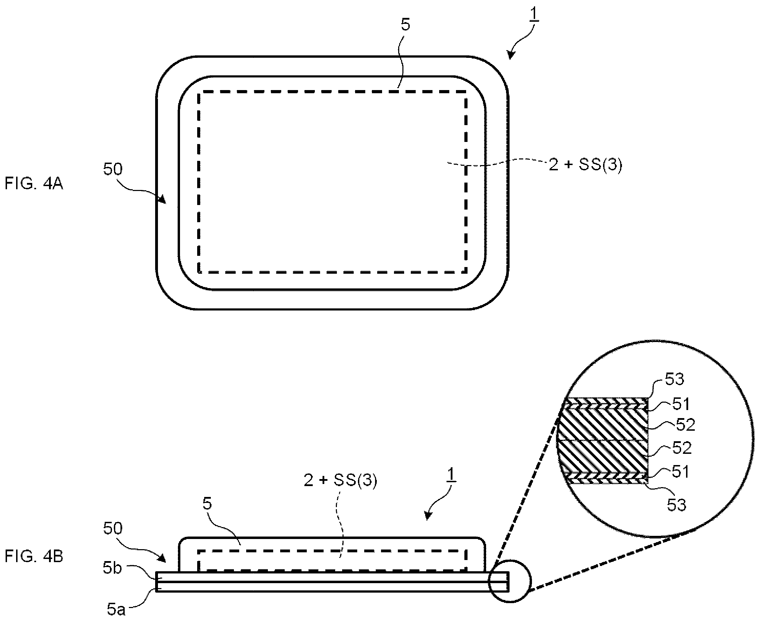

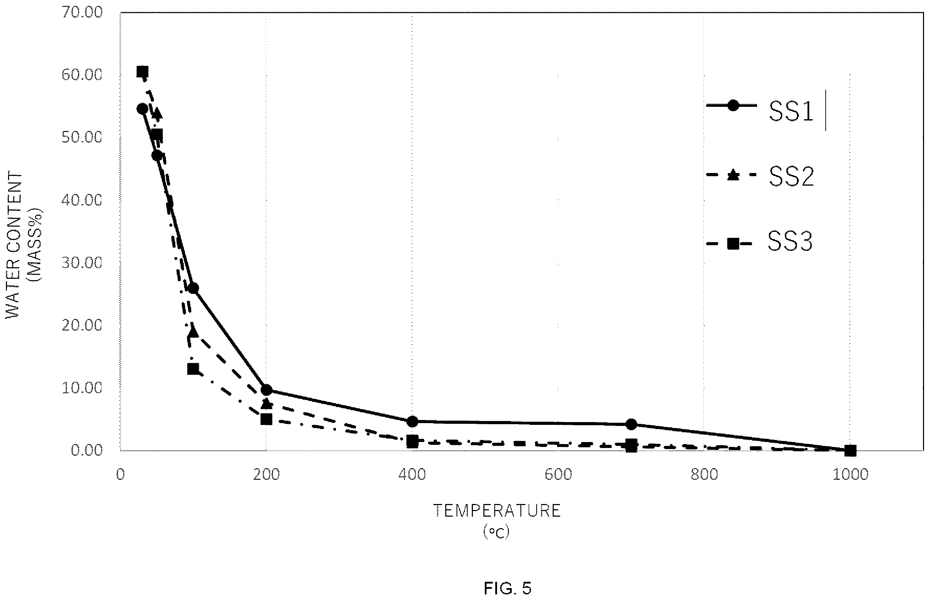

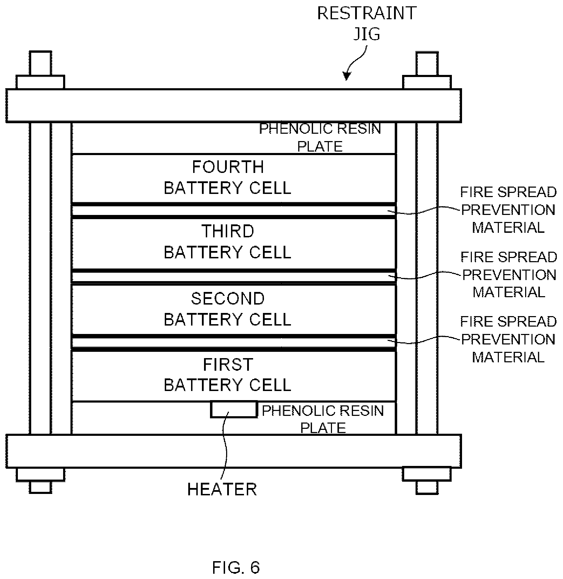

FIG. 1 is a schematic diagram illustrating states of water molecules present in sodium silicate. FIG. 2 is a cross-sectional view schematically illustrating an embodiment of a fire spread prevention material. FIG. 3 is a cross-sectional view schematically illustrating an embodiment of the fire spread prevention material. FIG. 4A is a plan view schematically illustrating an embodiment of the fire spread prevention material provided with an exterior body. FIG. 4B is a side view schematically illustrating the embodiment provided with the exterior body and an enlarged cross-sectional view of an end portion. FIG. 5 is a graph illustrating a change (reduction ratio) in water content of sodium silicate with temperature. FIG. 6 is a schematic diagram illustrating a configuration of a battery cell assembly for a simulated combustion test.

## DETAILED DESCRIPTION

Embodiments of the present disclosure are described below with reference to the drawings. Various features described in the embodiments shown below are combinable with one another.

In this specification, "content of Y in X" means a proportion (mass%) occupied by Y based on a total mass of X, and "water content of sodium silicate" means a proportion (mass%) occupied by water based on a total mass of sodium silicate.

FIG. 1 is a schematic diagram illustrating states of water molecules present in sodium silicate. FIG. 2 and FIG. 3 are cross-sectional views schematically illustrating an embodiment of a fire spread prevention material.

The fire spread prevention material of the present disclosure is used between two adjacent battery cells in a battery pack including two or more battery cells.

Here, the fire spread prevention material is required to have thermal insulation (fire spread prevention effect) that suppresses heat transfer to an adjacent battery cell in an abnormal event.

The fire spread prevention material of the present disclosure comprises an inorganic fiber base material containing inorganic fibers, and sodium silicate supported on the inorganic fiber base material. The sodium silicate has a water content of 15 mass% or more and 35 mass% or less at 100°C. Sodium silicate is a compound represented by $Na_2O \cdot nSiO_2 \cdot mH_2O$ (m represents 0 or a positive number).

In such a fire spread prevention material, sodium silicate contains sufficient water even at 100°C, so that thermal insulation (heat-insulating effect) due to latent heat of evaporation of water is favorably exhibited in an abnormal event. Accordingly, even when one battery cell ignites in an abnormal event, propagation of fire to an adjacent battery cell can be prevented or delayed.

Fire spread prevention performance of the fire spread prevention material can be evaluated by heating one surface of the fire spread prevention material at 650°C for 120 seconds and measuring a surface temperature (surface temperature at 120 seconds) on another surface.

The surface temperature on the other surface at 120 seconds is preferably about 150°C or lower, more preferably about 140°C or lower, and even more preferably about 120°C or lower. A lower limit of the surface temperature is, for example, about 25°C. A fire spread prevention material exhibiting the surface temperature within the above range can be judged to have excellent fire spread prevention.

The surface temperature can be measured by the method described in the Examples.

Further, during charge/discharge of a battery pack, battery cells repeatedly expand and contract; therefore, a fire spread prevention material preferably has flexibility capable of following expansion and contraction of the battery cells. In this case, by combining an inorganic fiber base material supporting sodium silicate with, for example, a polyurethane sheet material, favorable flexibility can be imparted to the fire spread prevention material. Accordingly, by following expansion and contraction of the battery cells, occurrence of mechanical load on the battery cells is reduced, thereby the battery pack can operate repeatedly and stably (charge/discharge).

In the fire spread prevention material of the present disclosure, sodium silicate contains a larger amount of water below 100°C. Therefore, the fire spread prevention material can maintain high flexibility during manufacture of the fire spread prevention material, during storage of the fire spread prevention material, and during manufacture of the battery pack. As a result, the productivity of the fire spread prevention material and the battery pack can be increased.

The water content of sodium silicate at 100°C may be about 15 mass% to 35 mass%, preferably about 18 mass% to 32 mass%, and more preferably about 21 mass% to 29 mass%. In this case, the effects described above can be further enhanced. The water content (change in water content) of sodium silicate can be measured (determined) by the method described in the Examples.

The sodium silicate preferably has a rate of decrease in water content in a range of 30°C to 100°C of 0.75 mass%/°C or less, more preferably about 0.65 mass%/°C or less, and even more preferably about 0.55 mass%/°C or less. In this case, because the fire spread prevention material contains sufficient water within a temperature range of 30°C to 100°C, the fire spread prevention material can contribute to improvement in productivity of the fire spread prevention material and the battery pack and to stable operation of the battery pack. The reduction ratio of water content (mass%/°C) above can be calculated by the following Equation 1.

Reduction ratio of water content (mass%/°C) = ([Water content of sodium silicate at 30°C] - [Water content of sodium silicate at 100°C])/[Water content of sodium silicate at 30°C] × 100     Equation 1:

As shown in FIG. 1, states of water molecules present in sodium silicate are classified into I: free water, II: water molecules hydrogen-bonded to OH, III: water molecules adsorbed on Na, and IV: water molecules existing as OH. Water molecules are considered to evaporate in the order I → II → III → IV (simultaneous progress may occur).

From the viewpoint of increasing water content at a higher temperature region in sodium silicate, increasing a proportion of $Na_2O$ in sodium silicate (that is, lowering an $SiO_2/Na_2O$ molar ratio) is preferable. Specifically, the $SiO_2/Na_2O$ molar ratio is preferably about 3.7 or less, more preferably about 1 to 3.5, even more preferably about 1.5 to 3, and particularly preferably 2 to 2.3. By using such sodium silicate, fire spread prevention of the fire spread prevention material is further improved, and productivity of the fire spread prevention material and the battery pack can also be further increased.

The proportion of sodium silicate in the total of sodium silicate and the inorganic fiber base material is preferably about 60 mass% to 98 mass%, more preferably about 70 mass% to 95 mass%, and even more preferably about 75 mass% to 90 mass%. In this case, superior fire spread prevention is more easily imparted to the fire spread prevention material and weight reduction of the material can be achieved.

The proportion of the inorganic fiber base material in the total of sodium silicate and the inorganic fiber base material is preferably about 1 mass% to 40 mass%, more preferably about 1 mass% to 35 mass%, even more preferably about 5 mass% to 35 mass%, particularly preferably about 8 mass% to 30 mass%, and most preferably about 10 mass% to 20 mass%. In this case, more excellent fire spread prevention is easily imparted to the fire spread prevention material.

The inorganic fiber base material is a base material (for example, a sheet) configured mainly of inorganic fibers. Such an inorganic fiber base material has a plurality of voids (pores) formed among the inorganic fibers. That is, the inorganic fiber base material has a porous structure. For example, by preparing an aqueous solution of sodium silicate having a relatively high viscosity, applying the aqueous solution to one surface of the inorganic fiber base material, and drying, a layer containing sodium silicate can be formed so as to be unevenly distributed on one surface of the inorganic fiber base material. Alternatively, for example, by preparing an aqueous solution of sodium silicate having a relatively low viscosity, impregnating the inorganic fiber base material with the aqueous solution, and drying, voids in the inorganic fiber base material can be filled with sodium silicate.

In this specification, the term "inorganic fiber" refers to a fibrous material having a length of about 1 mm or more and an aspect ratio (length/width) of about 100 or more. The length (fiber length) of an inorganic fiber is preferably about 3 mm to 12 mm. The width (fiber diameter) of an inorganic fiber is preferably about 3 $\mu$m to 10 $\mu$m. When inorganic fibers constituting the inorganic fiber base material have the above fiber length and fiber diameter, shape processability before drying in the manufacturing process of the inorganic fiber base material tends to be excellent. From the same viewpoint, the average fiber diameter of inorganic fibers is preferably about 5 $\mu$m to 10 $\mu$m. The average fiber diameter is a value measured by microscopic observation using a scanning electron microscope (SEM), an optical microscope, or the like.

Inorganic fibers constituting the inorganic fiber base material may be one kind or a plurality of kinds.

Examples of constituent materials of inorganic fibers include silica ($SiO_2$), alumina ($Al_2O_3$), carbon, silicon carbide (SiC), and the like. Among these, the constituent material of inorganic fibers preferably includes at least one selected from the group consisting of silica ($SiO_2$) and alumina ($Al_2O_3$). In this case, higher fire spread prevention can be imparted to the fire spread prevention material, and shape processability before drying tends to be excellent in the manufacturing process of the inorganic fiber base material.

Examples of such inorganic fibers include glass fibers, silica fibers, alumina-silica fibers, alumina fibers, basalt fibers, and rock wool. Among these, the inorganic fiber base material preferably includes at least one of glass fibers, silica fibers, and alumina-silica fibers. In this case, the effects above can be further enhanced.

The content of inorganic fibers in the inorganic fiber base material is preferably about 60 mass% to 100 mass%, more preferably about 70 mass% to 98 mass%, even more preferably about 80 mass% to 95 mass%, and particularly preferably about 85 mass% to 93 mass%. In this case, more excellent fire spread prevention can be imparted to the fire spread prevention material.

The inorganic fiber base material may further contain an organic binder. The organic binder is, for example, an organic material that binds inorganic fibers to one another, and one kind may be used alone or a plurality of kinds may be used in combination.

As the organic binder, a resin having a glass transition point at or below room temperature (for example, 25°C), a water-soluble resin, or the like can be used. Specific examples of the organic binder include acrylic resins, polyvinyl alcohol resins (such as vinylon), epoxy resins, cellulose such as cellulose microfibrils, and polyvinyl chloride resins.

Here, the term "acrylic resin" refers to a polymer including, as monomer units, at least one selected from the group consisting of acrylic acid and derivatives thereof (such as acrylic acid esters) and methacrylic acid and derivatives thereof (such as methacrylic acid esters). The term "cellulose microfibril" refers to cellulose fibers having been microfibrillated.

Among these, the organic binder preferably includes at least one selected from the group consisting of acrylic resins, polyvinyl alcohol resins, and epoxy resins. In this case, a fire spread prevention material having higher fire spread prevention tends to be obtained.

The content of the organic binder in the inorganic fiber base material is preferably about 0 mass% to 40 mass%, more preferably about 2 mass% to 30 mass%, even more preferably about 5 mass% to 20 mass%, and particularly preferably about 7 mass% to 15 mass%. In this case, a fire spread prevention material having more excellent fire spread prevention is more readily obtained.

The inorganic fiber base material may further contain inorganic particles. Examples of constituent materials of the inorganic particles include silica, aluminum hydroxide, zinc oxide, magnesium carbonate, aluminum silicate, and the like.

Examples of particles containing silica include, for example, precipitated silica, fumed silica, and colloidal silica. Precipitated silica is amorphous silica particles obtained by a precipitation method, which is a type of wet process, and has a porous structure.

The average particle diameter of the inorganic particles is preferably about 0.1 $\mu$m to 100 $\mu$m, more preferably about 0.5 $\mu$m to 80 $\mu$m, and even more preferably about 1 $\mu$m to 50 $\mu$m.

Here, the average particle diameter of the inorganic particles is a value of a volume-cumulative particle size D50 measured by a laser diffraction particle size analyzer. Inorganic particles having the average particle diameter above show favorable handling properties and are more readily distributed uniformly in the inorganic fiber base material.

The content of the inorganic particles in the inorganic fiber base material is preferably about 20 mass% to 50 mass%, more preferably about 25 mass% to 45 mass%, and even more preferably about 30 mass% to 40 mass%. By containing inorganic particles in such a content, thermal insulation is increased, and a fire spread prevention material having more excellent fire spread prevention is obtained. In addition, a lighter inorganic fiber base material (and hence, a lighter fire spread prevention material) having higher mechanical strength can be obtained.

From the viewpoint of increasing mechanical strength of the inorganic fiber base material, the inorganic fiber base material preferably contains no precipitated silica, and more preferably contains no inorganic particles.

The inorganic fiber base material may further contain a flocculant such as a polyamidamine polymer. The content of the flocculant in the inorganic fiber base material is preferably about 0.1 mass% to 5 mass%, more preferably about 0.3 mass% to 4 mass%, and even more preferably about 0.5 mass% to 3 mass%.

The inorganic fiber base material may or may not contain sodium silicate (sodium silicate other than sodium silicate having a water content at 100°C of 15 mass% to 35 mass%).

When such sodium silicate is contained, the content of sodium silicate in the inorganic fiber base material is preferably about 10 mass% or less, more preferably about 5 mass% or less, and even more preferably about 3 mass% or less.

As the inorganic fiber base material, for example, a base material excellent in retention (supporting) property for sodium silicate is preferable. The inorganic fiber base material is preferably a nonwoven fabric, and more preferably a sheet (wet-laid sheet) formed by a wet papermaking method. A wet-laid sheet is preferable from the viewpoint of being particularly excellent in retention of sodium silicate.

In the wet papermaking method, a dispersion obtained by dispersing materials (inorganic fibers, an organic binder, and the like) in water is formed on a papermaking screen and dried to produce the inorganic fiber base material (nonwoven fabric). According to such a method, an inorganic fiber base material (nonwoven fabric) having voids dispersed substantially uniformly can be obtained easily. Accordingly, a wet-laid sheet tends to have voids dispersed substantially uniformly and to be excellent in retention of sodium silicate.

The apparent density of the inorganic fiber base material is preferably about 0.08 g/cm$^3$ to about 0.20 g/cm$^3$. The basis weight of the inorganic fiber base material is, in the case of a thickness of 1 mm, preferably not more than about 100 g/m$^2$ and not more than about 170 g/m$^2$.

The thickness of the inorganic fiber base material is preferably about 0.2 mm to 3 mm.

The sodium silicate may be unevenly distributed on one surface side of the inorganic fiber base material, or may be impregnated into the inorganic fiber base material. That is, the fire spread prevention material 1 may be of a two-layer structure, as shown in FIG. 2, including the inorganic fiber base material 2 and a layer 3 containing the sodium silicate SS, or may be of a single-layer structure, as shown in FIG. 3, in which the sodium silicate SS is impregnated into the inorganic fiber base material 2.

The sodium silicate SS, which is distributed on or impregnated into the inorganic fiber base material 2, may be in a liquid form or a gel form, but is preferably in the gel form. The gel-form sodium silicate SS is readily supported by the inorganic fiber base material 2, making it difficult to detach from the inorganic fiber base material 2 during the manufacturing of the fire spread prevention material 1.

The two-layer fire spread prevention material 1 can be formed, for example, by preparing an aqueous sodium silicate SS solution having relatively high viscosity, applying the solution to one surface of the inorganic fiber base material 2, and then drying, thereby forming a layer 3 containing sodium silicate SS that is unevenly distributed on that surface. Suitable methods for the application include gravure coating, slot-die coating, knife coating, blade coating, comma coating, reverse-roll coating, and ink-jetting.

On the other hand, the single-layer fire spread prevention material 1 can be manufactured, for example, by preparing an aqueous solution of the sodium silicate SS having a relatively low viscosity, impregnating the inorganic fiber base material 2 therewith, optionally pressurizing, and then drying, thereby filling voids in the inorganic fiber base material 2 with the sodium silicate SS.

Either of the above fire spread prevention materials 1 is suitably manufactured by roll-to-roll processing in which the inorganic fiber base material 2 wound in a roll is fed, an aqueous solution of the sodium silicate SS is supplied and dried, and the resulting material is wound into a roll. As described above, the fire spread prevention material 1 can maintain high flexibility even during manufacture of the fire spread prevention material 1. Accordingly, winding the fire spread prevention material 1 into a roll can be performed favorably, and cracking or the like is unlikely to occur in the fire spread prevention material 1 even after winding into a roll.

In the configuration example of FIG. 2, the layer 3, and in the configuration example of FIG. 3, the fire spread prevention material 1 (hereinafter, "sodium silicate-containing portion") is preferably endothermic in a temperature range of 100°C to 300°C. The mass reduction ratio when the sodium silicate-containing portion is heated from 100°C to 300°C at 50°C/min is preferably 15 mass% or more.

Heat absorption of the sodium silicate-containing portion is considered to occur as water in the sodium silicate-containing portion (for example, water molecules in the sodium silicate) undergoes an endothermic reaction within the temperature range of 100°C to 300°C. On the other hand, mass decrease of the sodium silicate-containing portion is considered to result from this endothermic reaction.

Accordingly, the mass reduction ratio when the sodium silicate-containing portion is heated from 100°C to 300°C at 50°C/min correlates with the amount of water contained in the sodium silicate-containing portion and the amount of heat absorption. Therefore, when the mass reduction ratio of the sodium silicate-containing portion is 15 mass% or more, the amount of heat absorption in the temperature range above becomes large, and sufficient fire spread prevention is presumed to be obtained in the fire spread prevention material.

Heat absorption of the sodium silicate-containing portion can be confirmed, for example, by performing thermogravimetry-differential thermal analysis (TG-DTA) measurement and determining presence or absence of an endothermic peak within the temperature range of 100°C to 300°C.

The mass reduction ratio when the sodium silicate-containing portion is heated from 100°C to 300°C at 50°C/min is preferably about 15 mass% to about 30 mass%, more preferably about 17 mass% to about 28 mass%, even more preferably about 20 mass% to about 25 mass%, particularly preferably about 23 mass% to about 25 mass%, and most preferably about 23.5 mass% to about 25 mass%. Within the ranges above, a fire spread prevention material having more excellent fire spread prevention is readily obtained. The above mass reduction ratio can be calculated by Equation 2 below.

Equation 2:
$$\text{Mass reduction ratio (mass\%)} = \frac{[\text{mass reduction amount of the sodium silicate-containing portion}]}{[\text{mass of the sodium silicate-containing portion at } 100°\text{C}]} \times 100.$$

Here, the mass reduction amount of the sodium silicate-containing portion is a difference between the mass of the sodium silicate-containing portion at 100°C and the mass of the sodium silicate-containing portion at 300°C. When a plurality of sodium silicate-containing portions are present, a mass reduction ratio of each sodium silicate-containing portion may be within the range above, and a sum of mass reduction ratios of all the sodium silicate-containing portions may also be within the range above.

The fire spread prevention material preferably has insulating properties. In this case, for example, by protecting both side surfaces of the inorganic fiber base material supporting sodium silicate with resin sheet materials, or by accommodating the inorganic fiber base material supporting sodium silicate in an exterior body 5 described later, higher insulating properties can be imparted to the fire spread prevention material. Here, having insulating properties means that an electrical resistivity measured by volume resistivity measurement is $10^8$ $\Omega \cdot$cm or higher.

The fire spread prevention material may be in sheet form (for example, platelike) and may be processed into a predetermined shape. The predetermined shape may be appropriately set according to a shape of an installation site of the fire spread prevention material.

The predetermined shape may, for example, conform to the shape of the installation site of the fire spread prevention material (such as a surface shape of a member disposed to face the fire spread prevention material). Specific examples of the shape include a sheet having projections and recesses on a surface and a sheet having a bent portion with an angle of 90° or more. The shapes of the projections and recesses (shapes of convex and concave portions) are not particularly limited and may be rectangular in cross section, V-shaped in cross section, U-shaped in cross section, or the like.

The fire spread prevention material processed into the predetermined shape, when manufactured by the manufacturing method described later, can prevent occurrence of separation and fracture between the inorganic fiber base material and sodium silicate. The absence of separation and fracture in the fire spread prevention material can be confirmed, for example, by observing a cross section of the fire spread prevention material using a scanning electron microscope (SEM).

The fire spread prevention material processed into the predetermined shape can retain the shape. Whether the fire spread prevention material is capable of retaining the predetermined shape can be quantified by three-point bending strength of the fire spread prevention material.

Specifically, the three-point bending strength of the fire spread prevention material measured in accordance with JIS K 7171 is preferably about 0.5 MPa to about 5 MPa, more preferably about 0.8 MPa to about 4 MPa, and even more preferably about 1 MPa to about 3 MPa. A fire spread prevention material having such three-point bending strength can be said to have sufficient strength to retain the predetermined shape.

The total thickness of the inorganic fiber base material and the sodium silicate (in the configuration examples of FIGS. 2 and 3, the thickness of the fire spread prevention material 1) is preferably about 5 mm or less, preferably about 1 mm to about 5 mm, more preferably about 1.2 mm to about 4 mm, and even more preferably about 1.5 mm to about 3 mm. In this case, a fire spread prevention material having higher fire spread prevention is obtained, and an increase in installation space for the fire spread prevention material in the battery pack can be suppressed.

As shown in FIG. 4, the fire spread prevention material 1 may further include the exterior body 5 accommodating the inorganic fiber base material 2 and the sodium silicate SS. In other words, the fire spread prevention material 1 may be said to include a fire spread prevention material main body, which is the inorganic fiber base material 2 carrying the sodium silicate SS, and the exterior body 5 that accommodates the fire spread prevention material main body. By accommodating the sodium silicate SS inside the exterior body 5, the amount of water dissipated from the fire spread prevention material 1 can be adjusted (reduced).

FIG. 4A is a plan view schematically illustrating an embodiment of the fire spread prevention material provided with an exterior body. FIG. 4B is a side view schematically illustrating the embodiment provided with the exterior body, and an enlarged view showing a cross section of an end portion.

The water vapor transmission rate of the exterior body 5 at 40°C and 90% RH is preferably about 15 $g/m^2$/day or less, more preferably about 10 $g/m^2$/day or less, even more preferably about 5 $g/m^2$/day or less, and particularly preferably about 1 $g/m^2$/day or less. A lower limit of the water vapor transmission rate of the exterior body 5 at 40°C is about 0.01 $g/m^2$/day. By setting the water vapor transmission rate of the exterior body 5 within the range above, the amount of water dissipated from the fire spread prevention material 1 can be adjusted (reduced) more reliably, thereby further improving fire spread prevention.

The water vapor transmission rate (water vapor permeability) is measured by a method in accordance with JIS K 7129-2:2019.

The exterior body 5 accommodates, on an inside thereof, a composite of the inorganic fiber base material 2 and the sodium silicate SS by sealing outer peripheries of two sheet materials 5a and 5b with a seal portion 50. The seal portion 50 is formed by joining the outer peripheries of the two sheet materials 5a and 5b by methods such as fusion bonding (ultrasonic bonding, high-frequency bonding, thermal bonding). Alternatively, a single sheet material may be folded in two, and an outer periphery thereof may be sealed with a seal portion so that an interior thereof accommodates the composite of the inorganic fiber base material 2 and the sodium silicate SS.

In this embodiment, each sheet material 5a, 5b is a laminate including a base layer 51, a seal layer 52 provided on an inner-surface side of the base layer 51, and a protective layer 53 provided on an outer-surface side of the base layer 51.

The base layer 51 has functions of imparting mechanical strength to the sheet materials 5a and 5b and of regulating (blocking) transmission of water (water vapor).

The base layer 51 may be constituted of a metal foil. Examples of constituent materials of the metal foil include aluminum or an aluminum alloy, nickel or a nickel alloy, and stainless steel.

The thickness of the base layer 51 is not particularly limited, but is preferably about 5 $\mu$m to 100 $\mu$m, more preferably about 8 $\mu$m to 80 $\mu$m, and even more preferably about 12 $\mu$m to 60 $\mu$m. In this case, appropriate water vapor permeability and sufficient flexibility of the sheet materials 5a and 5b can be ensured.

The seal layer 52 has functions including sealing the exterior body 5 by being fusion-bonded.

Examples of constituent materials (materials capable of fusion bonding) for the seal layer 52 include, for example, polyethylene (LDPE, LLDPE), polypropylene, ethylene-vinyl acetate copolymer, polyethylene terephthalate, polybutylene terephthalate, polyvinyl chloride, polyvinylidene chloride, ethylene-vinyl alcohol copolymer, polystyrene, polyacrylonitrile, ethylene-(meth)acrylic acid copolymer, and polymethylpentene. Polypropylene is more preferable as a constituent material of the seal layer 52, and unoriented polypropylene is even more preferable.

The thickness of the seal layer 52 is not particularly limited, but is preferably about 5 $\mu$m to 200 $\mu$m, more preferably about 10 $\mu$m to 100 $\mu$m, even more preferably about 20 $\mu$m to 120 $\mu$m, and particularly preferably about 30 $\mu$m to 80 $\mu$m. Accordingly, flexibility of the respective sheet materials 5a and 5b can be ensured while enhancing sealability.

The protective layer 53 has functions including protecting the base layer 51 (preventing, for example, corrosion of the base layer 51).

A relatively hard resin material is used as a constituent material of the protective layer 53. Examples of such hard resin materials include polyamide resin (nylon), acrylic resin, polyimide resin, polyetherimide resin, polysulfone resin, polyether sulfone resin, polyether ether ketone resin, polycarbonate resin, polyvinyl butyral resin, polyarylate resin, fluororesin, and polyester resin.

The thickness of the protective layer 53 is not particularly limited, but is preferably not less than about 5 $\mu$m and not less than about 100 $\mu$m, more preferably not less than about 10 $\mu$m and not less than about 50 $\mu$m, and even more preferably not less than about 15 $\mu$m and not less than about 30 $\mu$m.

The thickness of the exterior body is not particularly limited, but is preferably about 250 $\mu$m or less, more preferably about 200 $\mu$m or less, and even more preferably about 100 $\mu$m or less. In this case, the water vapor transmission rate of the exterior body 5 can be readily set within the above range. As a result, the amount of water dissipated from the fire spread prevention material 1 can be suitably adjusted (reduced), thereby further improving fire spread prevention.

The sheet materials 5a and 5b are not limited to a three-layer structure and may, depending on required properties, have a single-layer (one-layer) structure, a two-layer structure, or a structure of four or more layers.

Although a fire spread prevention material according to one embodiment has been described above, the fire spread prevention material of the present disclosure is not limited to the embodiment described above.

As another embodiment of the present disclosure, a battery pack including two or more battery cells and the above fire spread prevention material disposed between adjacent battery cells is provided. The battery pack is, for example, a lithium-ion battery.

As another embodiment of the present disclosure, an automobile including an automobile body and the above battery pack mounted on the automobile body is provided.

Further, the following aspects may also be provided.

(1) A fire spread prevention material comprising: an inorganic fiber base material containing inorganic fibers; and sodium silicate supported on the inorganic fiber base material, wherein the sodium silicate has a water content of 15 mass% or more and 35 mass% or less at 100°C.

(2) The fire spread prevention material according to (1), wherein the sodium silicate has a rate of decrease in water content in a range of 30°C to 100°C of 0.75 mass%/°C or less.

(3) The fire spread prevention material according to (1) or (2), wherein a constituent material of the inorganic fiber includes at least one selected from the group consisting of silica ($SiO_2$) and alumina ($Al_2O_3$).

(4) The fire spread prevention material according to any one of (1) to (3), wherein the inorganic fiber base material is a wet-laid sheet.

(5) The fire spread prevention material according to any one of (1) to (4), wherein the sodium silicate is unevenly distributed on one surface side of the inorganic fiber base material, or is impregnated into the inorganic fiber base material.

(6) The fire spread prevention material according to any one of (1) to (5), wherein a total thickness of the inorganic fiber base material and the sodium silicate is 5 mm or less.

(7) The fire spread prevention material according to any one of (1) to (6), further comprising an exterior body accommodating the inorganic fiber base material and the sodium silicate.

(8) The fire spread prevention material according to (7), wherein the exterior body has a water vapor transmission rate of 15 g/m$^2$/day or less at 40°C and 90% RH, and has a thickness of 250 $\mu$m or less.

(9) The fire spread prevention material according to any one of (1) to (8), wherein the fire spread prevention material is used by being disposed between two adjacent battery cells of the battery pack including two or more battery cells.

(10) A battery pack comprising: two or more battery cells; and the fire spread prevention material according to any one of (1) to (9) disposed between the adjacent battery cells.

(11) An automobile comprising: an automobile body; and the battery pack according to claim 10 mounted on the automobile body.

The present disclosure is not limited thereto.

As described above, various embodiments of the present invention have been explained, but these are presented by way of example and are not intended to limit the scope of the invention. The novel embodiments can also be implemented in various other forms, and various omissions, replacements, and modifications can be made without departing from the gist of the invention. Such embodiments and their modifications are included in the scope and spirit of the invention and are also encompassed within the scope of the invention set forth in the claims and equivalents thereof.

[EXAMPLES]

Hereinafter, the present disclosure is described in further detail with reference to the following Examples and Comparative Examples; however, the present disclosure is not limited to the following Examples.

1. Preparation of materials

<Sodium silicate>

SS1: $SiO_2$/$Na_2O$ molar ratio = 2.1
SS2: $SiO_2$/$Na_2O$ molar ratio = 3.2
SS3: $SiO_2$/$Na_2O$ molar ratio = 3.7

<Inorganic fiber>

F1: glass fiber (average fiber diameter: 10 $\mu$m)

<Organic binders>

B1: vinylon fiber (average fiber diameter: 5 $\mu$m)

2. Change in water content of sodium silicate and results

For each of sodium silicates SS1 to SS3, mass change up to 1000 °C was measured using a thermogravimetric measuring apparatus (manufactured by NETZSCH Japan; "High-Sensitivity Differential Thermal Balance STA 2500 Regulus"). The measurement value at 1000 °C was defined as "the amount of solid content contained in each of sodium silicates SS1 to SS3," and, based on the value of the solid content and a measured value in the thermogravimetric measurement, a change in water content in each of sodium silicates SS1 to SS3 was determined.

FIG. 5 is a graph showing a change (rate of decrease) in water content of sodium silicate with temperature.

Sodium silicate SS1 had a water content at 30 °C of 55 mass%, a water content at 100 °C of 26 mass%, and a rate of decrease in water content from 30 °C to 100 °C of 0.53 mass%/°C.

Sodium silicate SS2 had a water content at 30 °C of 61 mass%, a water content at 100 °C of 19 mass%, and a rate of decrease in water content from 30 °C to 100 °C of 0.69 mass%/°C.

Sodium silicate SS3 had a water content at 30 °C of 61 mass%, a water content at 100 °C of 13 mass%, and a rate of decrease in water content from 30 °C to 100 °C of 0.79 mass%/°C.

In this manner, for sodium silicates SS1, SS2, and SS3, an order of magnitude of the water content was reversed between 30 °C and 100 °C.

3. Preparation of inorganic fiber base material (wet-laid sheet)

To 100 parts by mass of pure water were added 6.5 parts by mass of the inorganic fiber F1 and 0.7 parts by mass of the organic binder B1, and mixing was performed for 2 hours with a homomixer manufactured by Tokushukika Kogyo Co., Ltd. to obtain a dispersion. The dispersion was formed into sheets on a papermaking screen and dried in a Yankee dryer, thereby producing wet-laid nonwoven sheets A and B having different thicknesses.

The thickness of the wet-laid sheet A was 1.5 mm, and the basis weight was 73 g/m$^2$. The thicknesses of the wet-laid sheet B were 1.5 mm, 2 mm, and 3 mm, and the basis weight was 120 g/m$^2$.

4. Production of fire spread prevention material

(Example 1)

An aqueous solution of sodium silicate SS1 adjusted to a predetermined solid content was supplied, by a slot-die coating method, onto an upper surface of the wet-laid sheet (inorganic fiber base material) A and then dried at 30 °C. Thereby, a two-layer fire spread prevention material having an upper layer containing sodium silicate SS1 and the wet-laid sheet was produced (total thickness: 3 mm).

(Example 2)

Except that sodium silicate SS1 was replaced with sodium silicate SS2, a two-layer fire spread prevention material was produced in the same manner as in Example 1.

(Comparative Example 1)

Except that sodium silicate SS1 was replaced with sodium silicate SS3, a two-layer fire spread prevention material was produced in the same manner as in Example 1.

(Example 3)

An aqueous solution of sodium silicate SS1 adjusted to a predetermined solid content was impregnated into the wet-laid sheet (inorganic fiber base material) B and, after compression with a roller, drying was carried out at 30 °C. Thereby, a single-layer fire spread prevention material in which sodium silicate SS1 was filled in voids of the wet-laid sheet was produced (total thicknesses: 1.5 mm, 2 mm, and 3 mm).

(Example 4)

Except that sodium silicate SS1 was replaced with sodium silicate SS2, a single-layer fire spread prevention material was produced in the same manner as in Example 3.

(Comparative Example 2)

Except that sodium silicate SS1 was replaced with sodium silicate SS3, a single-layer fire spread prevention material was produced in the same manner as in Example 3.

5. Measurement and evaluation

5-1. Confirmation of endothermic peak

First, a portion of the obtained fire spread prevention material was collected and pulverized to obtain a measurement sample. Next, using a thermogravimetry-differential thermal analysis (TG-DTA) apparatus, a DTA measurement of the measurement sample was performed, and a differential thermal curve upon heating from room temperature to 300 °C at a rate of 10 °C/min was obtained.

In the obtained differential thermal curve, presence or absence of an endothermic peak within the temperature range from 100 °C to 300 °C was confirmed.

5-2. Evaluation of fire spread prevention

On a hot plate heated to 650 °C (manufactured by MSA Factory; "PA8015"), a fire spread prevention material having a thickness of 3 mm, a K-type thermocouple, and an aluminum block (500 g) were laminated in this order. Then, after 120 seconds, the rear-surface temperature of the fire spread prevention material (surface temperature on the side opposite to the hot plate) was measured, and fire spread prevention was evaluated according to the following criteria.

A: The rear-surface temperature of the fire spread prevention material was 150 °C or less.
B: The rear-surface temperature of the fire spread prevention material was higher than 150 °C and 190 °C or less.
C: The rear-surface temperature of the fire spread prevention material was higher than 190 °C.

In the case of "B" according to the criteria above, the fire spread prevention material was evaluated as having sufficient fire spread prevention, and in the case of "A," the fire spread prevention material was evaluated as having excellent fire spread prevention.

The results are shown in Tables 1 and 2 below.

[Table 1]

TABLE 1

| TWO-LAYER STRUCTURE | | | EXAMPLE 1 | EXAMPLE 2 | COMPARATIVE EXAMPLE 1 |
|---|---|---|---|---|---|
| LOWER LAYER | INORGANIC FIBER | TYPE | F1 | F1 | F1 |
| | | CONTENT (MASS%) | 90 | 90 | 90 |
| | ORGANIC BINDER | TYPE | B1 | B1 | B1 |
| UPPER LAYER | SODIUM SILICATE | TYPE | SS1 | SS2 | SS3 |
| | | CONTENT (MASS%) | 90 | 90 | 90 |
| TOTAL THICKNESS (mm) | | | 3 | 3 | 3 |
| PRESENCE OF HEAT ABSORPTION IN SODIUM SILICATE-CONTAINING PORTION | | | PRESENT | PRESENT | ABSENT |
| FIRE SPREAD PREVENTION | RESULT | | A | A | C |
| | BACK-SURFACE TEMPERATURE (°C) | | 110 | 135 | 203 |

[Table 2]

TABLE 2

| SINGLE-LAYER STRUCTURE | | EXAMPLE 3 | EXAMPLE 4 | COMPARATIVE EXAMPLE 2 |
|---|---|---|---|---|
| INORGANIC FIBER | TYPE | F1 | F1 | F1 |
| | CONTENT (MASS%) | 20 | 20 | 20 |
| ORGANIC BINDER | TYPE | B1 | B1 | B1 |
| SODIUM SILICATE | TYPE | SS1 | SS2 | SS3 |
| | CONTENT (MASS%) | 80 | 80 | 80 |
| TOTAL THICKNESS (mm) | | 3 | 3 | 3 |
| PRESENCE OF HEAT ABSORPTION IN SODIUM SILICATE-CONTAINING PORTION | | PRESENT | PRESENT | ABSENT |
| FIRE SPREAD PREVENTION | RESULT | A | A | C |
| | BACK-SURFACE TEMPERATURE (°C) | 109 | 132 | 198 |

Each of the fire spread prevention materials of Example 3, Example 4, and Comparative Example 2 (thickness: 3 mm) was sandwiched between two exterior sheets (manufactured by TOPPAN Printing Co., Ltd., "GX-P-F"; thickness: 200 pm; water vapor transmission rate: 0.05 g/m2/day (40 °C, 90% RH)), and a peripheral portion thereof was sealed to produce an exterior body. Thereby, a fire spread prevention material provided with an exterior body was obtained. The fire spread prevention material provided with the exterior body was evaluated for fire spread prevention according to the method described in "5-2. Evaluation of fire spread prevention."

The results are shown in Table 3 below.

[Table 3]

TABLE 3

| SINGLE-LAYER STRUCTURE | | EXAMPLE 5 | EXAMPLE 6 | COMPARATIVE EXAMPLE 3 |
|---|---|---|---|---|
| INORGANIC FIBER | TYPE | F1 | F1 | F1 |
| | CONTENT (MASS%) | 20 | 20 | 20 |
| ORGANIC BINDER | TYPE | B1 | B1 | B1 |
| SODIUM SILICATE | TYPE | SS1 | SS2 | SS3 |
| | CONTENT (MASS%) | 80 | 80 | 80 |
| EXTERIOR BODY | GX-P-F (FRONT/BACK) | PRESENT | PRESENT | PRESENT |
| | THICKNESS ($\mu$m) | 200 | 200 | 200 |
| TOTAL THICKNESS (mm) | | 3.4 | 3.4 | 3.4 |
| PRESENCE OF HEAT ABSORPTION IN SODIUM SILICATE-CONTAINING PORTION | | PRESENT | PRESENT | ABSENT |
| FIRE SPREAD PREVENTION | RESULT | A | A | C |
| | BACK-SURFACE TEMPERATURE (°C) | 103 | 123 | 197 |

6. Simulated combustion test

FIG. 6 is a schematic diagram illustrating a configuration of a battery cell assembly for a simulated combustion test.

(Test Example 1)

First, four battery cells ("laminate type", "capacity of about 80 Ah") were prepared. Each battery cell had an overall length of 545 mm, a width of 98 mm, a thickness of 9 mm, and a weight of 1.1 kg. One sheet of the fire spread prevention material of Example 3 (thickness: 1 mm) was disposed between each pair of adjacent battery cells. Thus, spacing between the battery cells was set to 1 mm. With phenolic resin plates disposed above and below the stack, fixation was performed by a restraining jig. Thereby, a battery cell assembly was fabricated.

In addition, in the lower phenolic resin plate, a heater was provided so as to contact a first battery cell.

(Test Example 2)

Except for the following changes, a battery cell assembly was fabricated in the same manner as in Test Example 1.

One sheet of the fire spread prevention material of Example 3 (thickness: 1.5 mm) was disposed between a first battery cell and a second battery cell; one sheet of the fire spread prevention material of Example 3 (thickness: 1.5 mm) was disposed between a second battery cell and a third battery cell; and one sheet of the fire spread prevention material of Example 3 (thickness: 2 mm) was disposed between a third battery cell and a fourth battery cell. Thus, spacing between the battery cells was set, from a lower side, to 1.5 mm, 1.5 mm, and 2 mm, respectively.

(Reference Example)

Between a first battery cell and a second battery cell, nothing was disposed; between a second battery cell and a third battery cell and between a third battery cell and a fourth battery cell, an alumina fiber base material (manufactured by Denka Co., Ltd., "Alcen Paper") having a thickness of 1 mm was disposed, respectively. Otherwise, a battery cell assembly was fabricated in the same manner as in Test Example 1.

Electric power of 800 W was applied to the heater of each battery cell assembly, and, after the first battery cell ignited, the time until the second, third, and fourth battery cells ignited was measured. Approximately 12 seconds were required for the first battery cell to ignite.

The results are shown in Table 4 below.

[Table 4]

TABLE 4

|  |  | BATTERY CELL | FIRST | SECOND | THIRD | FOURTH |
|---|---|---|---|---|---|---|
| TEST EXAMPLE 1 | | BATTERY CELL SPACING | 1mm | 1 mm | | 1 mm |
| | | TIME TO IGNITION (S) | - | 73 | 75 | 75 |
| TEST EXAMPLE 2 | | BATTERY CELL SPACING | 1.5 mm | 1.5 mm | | 2 mm |
| | | TIME TO IGNITION (S) | - | 175 | 183 | 341 |
| REFEREN CE EXAMPLE | | BATTERY CELL SPACING | 0 mm | 1 mm | | 1 mm |
| | | TIME TO IGNITION (S) | - | 14 | 36 | 32 |

In place of glass fibers, use of silica fibers, alumina fibers, or alumina-silica fibers also yields similar effects.

[Reference Signs List]

1: Fire spread prevention material.
2: Inorganic fiber base material.
3: Layer.
5: Exterior body.
5a: Sheet material.
5b: Sheet material.
50: Seal portion.
51: Base layer.
52: Seal layer.
53: Protective layer.
SS: Sodium silicate.

## Claims

1. A fire spread prevention material comprising: an inorganic fiber base material containing inorganic fibers; and

   sodium silicate supported on the inorganic fiber base material, wherein
   the sodium silicate has a water content of 15 mass% or more and 35 mass% or less at 100°C.

2. The fire spread prevention material according to claim 1, wherein
   the sodium silicate has a rate of decrease in water content in a range of 30°C to 100°C of 0.75 mass%/°C or less.

3. The fire spread prevention material according to claim 1 or 2, wherein
   a constituent material of the inorganic fiber includes at least one selected from the group consisting of silica ($SiO_2$) and alumina ($Al_2O_3$).

4. The fire spread prevention material according to any one of claims 1 to 3, wherein
   the inorganic fiber base material is a wet-laid sheet.

5. The fire spread prevention material according to any one of claims 1 to 4, wherein
   the sodium silicate is unevenly distributed on one surface side of the inorganic fiber base material, or is impregnated into the inorganic fiber base material.

6. The fire spread prevention material according to any one of claims 1 to 5, wherein
   a total thickness of the inorganic fiber base material and the sodium silicate is 5 mm or less.

7. The fire spread prevention material according to any one of claims 1 to 6,
   further comprising an exterior body accommodating the inorganic fiber base material and the sodium silicate.

8. The fire spread prevention material according to claim 7, wherein
   the exterior body has a water vapor transmission rate of 15 g/m$^2$/day or less at 40°C and 90% RH, and has a thickness of 250 μm or less.

9. The fire spread prevention material according to any one of claims 1 to 8, wherein
   the fire spread prevention material is used by being disposed between two adjacent battery cells of the battery pack including two or more battery cells.

10. A battery pack comprising:

    two or more battery cells; and
    the fire spread prevention material according to any one of claims 1 to 9 disposed between the adjacent battery cells.

11. An automobile comprising:

    an automobile body; and
    the battery pack according to claim 10 mounted on the automobile body.

FIG. 1

FIG. 2

FIG. 3

FIG. 4A

50

5

1

2 + SS(3)

FIG. 4B

5a
5b
50

5

2 + SS(3)

1

53
51
52
53
51
52
53

FIG. 5

RESTRAINT JIG

PHENOLIC RESIN PLATE

FOURTH BATTERY CELL

FIRE SPREAD PREVENTION MATERIAL

THIRD BATTERY CELL

FIRE SPREAD PREVENTION MATERIAL

SECOND BATTERY CELL

FIRE SPREAD PREVENTION MATERIAL

FIRST BATTERY CELL

PHENOLIC RESIN PLATE

HEATER

FIG. 6

## INTERNATIONAL SEARCH REPORT

| International application No. |
|---|
| **PCT/JP2024/026768** |

| | |
|---|---|
| **A.** | **CLASSIFICATION OF SUBJECT MATTER** |

*C03C 25/1095*(2018.01)i; *C03C 25/16*(2006.01)i; *C03C 25/36*(2006.01)i; *C03C 25/285*(2018.01)i; *C03C 25/465*(2018.01)i
FI: C03C25/1095; C03C25/16; C03C25/285; C03C25/36; C03C25/465

According to International Patent Classification (IPC) or to both national classification and IPC

| | |
|---|---|
| **B.** | **FIELDS SEARCHED** |

Minimum documentation searched (classification system followed by classification symbols)

C03C25/00-C03C25/70; H01M50/204

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| A | WO 2022/270359 A1 (DENKA CO., LTD.) 29 December 2022 (2022-12-29) | 1-11 |
| A | 大高武士ら, ケイ酸ナトリウムを混合させた高含水耐火材の遮熱性能, 日本火災学会論文集, 2006, vol. 56, no.1, pp. 9-14, (OTAKA, Takeshi et al. Heat Protection Characteristics of Fire Protection Materials of High Water Content Using Sodium Silicate. Bulletin of Japan Association for Fire Science and Engineering.) | 1-11 |

☐ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **28 August 2024** | **10 September 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/026768**

| Patent document cited in search report | Publication date (day/month/year) | Patent family member(s) | Publication date (day/month/year) |
|---|---|---|---|
| WO 2022/270359 A1 | 29 December 2022 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010053196 A